# EUROPÄISCHE PATENTSCHRIFT

(11) **EP 3 344 857 B1**
(45) Veröffentlichungstag und Bekanntmachung des Hinweises auf die Patenterteilung: **19.02.2020**
(21) Anmeldenummer: 16778262.2
(22) Anmeldetag: 26.09.2016
(51) Int. Cl.: F01K 23/10, F01K 3/00, F01K 1/04, F01K 3/14, F01K 3/18, F01K 3/24, F01K 13/02

(54) **VERFAHREN ZUM BETREIBEN EINES GAS-UND-DAMPF-KOMBINATIONSKRAFTWERKS**
METHOD FOR OPERATING A GAS-AND-STEAM COMBINED CYCLE POWER STATION
PROCÉDÉ PERMETTANT DE FAIRE FONCTIONNER UNE CENTRALE À CYCLE COMBINÉ

(30) Priorität: 07.10.2015 DE 102015219391
(43) Veröffentlichungstag der Anmeldung: 11.07.2018
(73) Patentinhaber: Siemens Aktiengesellschaft, 80333 München (DE)
(72) Erfinder: BECKER, Stefan, 91325 Adelsdorf (DE); DANOV, Vladimir, 91056 Erlangen (DE); LENK, Uwe, 08064 Zwickau (DE); REISSNER, Florian, 90425 Nürnberg (DE); SCHMID, Erich, 90449 Nürnberg (DE); SCHÄFER, Jochen, 90408 Nürnberg (DE)
(86) Internationale Anmeldenummer: PCT/EP2016/072836
(87) Internationale Veröffentlichungsnummer: WO 2017/060111

(56) Entgegenhaltungen:
- EP-A1- 0 439 754
- WO-A1-2014/026784
- WO-A1-2015/043949
- DE-A1- 4 025 421
- JP-A- H04 109 036

## Beschreibung

Die Erfindung betrifft ein Verfahren zum Betreiben eines Gas-und-Dampf-Kombinationskraftwerks gemäß dem Oberbegriff von Patentanspruch 1.

Ein solches Verfahren zum Betreiben eines Gas-und-Dampf-Kombinationskraftwerks sowie ein solches Gas-und-Dampf-Kombinationskraftwerk (GuD-Kraftwerk) sind aus dem allgemeinen Stand der Technik bereits hinlänglich bekannt. Das Gas-und-Dampf-Kraftwerk wird auch als Combined Cycle Power Plant bezeichnet und umfasst wenigstens eine Turbineneinrichtung, wenigstens einen von der Turbineneinrichtung antreibbaren Generator zum Bereitstellen von elektrischem Strom und wenigstens eine Gasturbine. Wir der Generator von der Turbineneinrichtung angetrieben, so kann der Generator mechanische Energie in elektrische Energie bzw. elektrischen Strom umwandeln und diese elektrische Energie bzw. den elektrischen Strom bereitstellen. Der elektrische Strom kann dann beispielsweise in ein Stromnetz eingespeist werden.

Die Gasturbine stellt dabei Abgas bereit, mittels welchem heißer Dampf erzeugt wird. Beispielsweise wird der Gasturbine ein Brennstoff, insbesondere ein gasförmiger Brennstoff wie beispielsweise Erdgas, zugeführt, wobei der Brennstoff mittels der Gasturbine verbrannt wird. Insbesondere wird der Gasturbine zusätzlich zu dem Brennstoff Sauerstoff bzw. Luft zugeführt, sodass aus der Luft und dem Brennstoff ein Brennstoff-Luft-Gemisch entsteht. Dieses Brennstoff-Luft-Gemisch wird verbrannt, woraus Abgas der Gasturbine resultiert. Mittels des Abgases wird beispielsweise eine Flüssigkeit, insbesondere Wasser, erwärmt und dadurch verdampft, woraus heißer Dampf resultiert. Dies bedeutet, dass der heiße Dampf mittels des Abgases der Gasturbine derart erzeugt wird, dass mittels des heißen Abgases der Gasturbine eine Flüssigkeit wie beispielsweise Wasser verdampft wird.

Der Dampf wird der Turbineneinrichtung zugeführt, sodass die Turbineneinrichtung mittels des Dampfs angetrieben wird. Wie bereits beschrieben, wird über die Turbineneinrichtung bzw. mittels der Turbineneinrichtung der Generator angetrieben. Das Gas-und-Dampf-Kombinationskraftwerk, welches auch als Gas-und-Dampf-Kombikraftwerk bezeichnet wird, ist ein Kraftwerk, in dem die Prinzipien eines Gasturbinenkraftwerks und eines Dampfkraftwerks kombiniert werden. Die Gasturbine bzw. ihr Abgas dient dabei als Wärmequelle für einen nachgeschalteten Dampferzeuger, mittels welchem der Dampf für die Turbineneinrichtung bzw. zum Antreiben der Turbineneinrichtung erzeugt wird. Die Turbineneinrichtung ist somit als Dampfturbine ausgebildet.

Es hat sich gezeigt, dass ein solches Gas-und-Dampf-Kombinationskraftwerk (GuD-Kraftwerk), insbesondere je nach Strombedarf, abgeschaltet werden muss, sodass der Generator keinen elektrischen Strom bereitstellt und beispielsweise nicht angetrieben wird und sodass mittels des GuD-Kraftwerks kein Strom in das Stromnetz eingespeist wird. Infolge des Abschaltens kann das Gas-und-Dampf-Kombinationskraftwerk auskühlen, woraufhin ein erneutes Anschalten bzw. ein Hochfahren des Gas-und-Dampf-Kombinationskraftwerks eine besonders lange Zeit und einen besonders hohen Energiebedarf erfordert. Daher ist es üblicherweise vorgesehen, das Gas-und-Dampf-Kombinationskraftwerk während einer Zeit, während welcher das Gas-und-Dampf-Kombinationskraftwerk abgeschaltet ist, warm zu halten. Dabei wird das Gas-und-Dampf-Kombinationskraftwerk mittels Dampf warmgehalten. Dieser dampf zum Warmhalten wird üblicherweise mittels eines Boilers, insbesondere eines Gasboilers, erzeugt. Mittels des Boilers wird eine Flüssigkeit wie beispielsweise Wasser verdampft, wobei hierzu ein Brennstoff zum Einsatz kommt. Der mittels des Boilers erzeugte Dampf wird zumindest durch einen Teil des Gas-und-Dampf-Kombinationskraftwerks geleitet, um dieses warm zu halten bzw. zu erwärmen. Dann kann das Gas-und-Dampf-Kombinationskraftwerk nach einem Abschalten desselben im Rahmen eines Warmstarts gestartet werden, da das Gas-und-Dampf-Kombinationskraftwerk dann eine bereits hinreichend hohe Temperatur, bei welcher es gestartet werden kann, aufweist.

Jedoch ist mit zunehmender Zeit, die das Gas-und-Dampf-Kombinationskraftwerk abgeschaltet ist, eine zunehmende Menge an Dampf zum Warmhalten bzw. Erwärmen des Gas-und-Dampf-Kombinationskraftwerks erforderlich, da dieses sukzessive auskühlt.

Ferner ist es bekannt, ein solches Gas-und-Dampf-Kombinationskraftwerk in unterschiedlichen Lastbereichen zu betreiben, insbesondere in Abhängigkeit von dem Strombedarf. Beispielsweise kann das Gas-und-Dampf-Kombinationskraftwerk in einem Volllastbereich bzw. bei Volllast sowie einem demgegenüber niedrigeren Teillastbereich, das heißt bei Teillast betrieben werden. Um von dem Betrieb im Teillastbereich in den Betrieb in den Volllastbereich umzuschalten, wird das Gas-und-Dampf-Kombinationskraftwerk von dem Teillastbereich in den demgegenüber höheren Volllastbereich hochgefahren. Dabei ist ein schnelles Hochfahren des Gas-und-Dampf-Kombinationskraftwerks wünschenswert. Das Hochfahren wird auch als Hochlaufen, Hochlauf oder Ramp Up bezeichnet. Darunter ist zu verstehen, dass eine Last, bei welcher das Gas-und-Dampf-Kombinationskraftwerk betrieben wird, erhöht wird.

Die DE 40 25 421 A1 offenbart eine Vorrichtung zur Wärmerückgewinnung aus einem Abgas, das auf einem Hochtemperaturgas einer Wärmekraftmaschine und einem Niedertemperaturgas nach Wärmeaustausch basiert.

Des Weiteren ist aus der WO 2014/026784 A1 eine Kraftwerksanordnung bekannt, mit einer Energieerzeugungseinheit zur Erzeugung von nutzbarer thermischer Energie auf der Grundlage von physikalischen und/oder chemischen Abläufen, und mit einer für den regelmäßigen Betrieb wenigstens teilweise mit Wärme zu versorgenden Hochtemperatur-Speichereinheit. Ferner ist ein Leitungssystem zur thermischen Kopplung der Energieerzeugungseinheit mit der Hochtemperatur-Speichereinheit vorgesehen.

Der WO 2015/043949 A1 ist ein Verfahren zum Betreiben einer Dampfturbinenanlage mit einer Dampfturbine und einem Dampferzeuger als bekannt zu entnehmen, wobei die Dampfturbinenanlage einen der Dampfturbine zugeordneten Wärmespeicher umfasst, aus dem Dampf entnommen und der Dampfturbine zugeführt wird. Dabei ist es vorgesehen, dass der Dampf der Dampfturbine zugeführt wird, während der Dampferzeuger außer Betrieb ist.

Darüber hinaus offenbart die EP 0 439 754 A1 eine Gas/Dampf-Kraftwerksanlage, im Wesentlichen bestehend aus mindestens einer fossil befeuerten Gasturbogruppe, mindestens einem Dampfkreislauf, einem der Gasturbogruppe nachgeschalteten Abhitzekessel, der von den Abgasen der Gasturbogruppe beaufschlagbar ist, und einem Generator.

Aufgabe der vorliegenden Erfindung ist es daher, ein Verfahren der eingangs genannten Art derart weiterzuentwickeln, dass ein schnelles und energieeffizientes Hochfahren des Gas-und-Dampf-Kombinationskraftwerks realisierbar ist.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um ein Verfahren der im Oberbegriff des Patentanspruchs 1 angegebenen Art derart weiterzuentwickeln, dass das Gas-und-Dampf-Kombinationskraftwerk besonders schnell und effizient bzw. energiegünstig hochgefahren werden kann, ist es bei einem ersten Schritt des Verfahrens vorgesehen, dass zumindest ein Teil des mittels der Gasturbine bzw. mittels des Abgases der Gasturbine erzeugten Dampfes abgezweigt wird. Der abgezweigte Dampf, das heißt der abgezweigte Teil des Dampfes wird in einem Dampfspeicher, insbesondere eine Ruthsspeicher, gespeichert. Der Ruthsspeicher ist ein Dampfspeicher, welcher beispielsweise einen Speicherbereich aufweist, der, insbesondere größtenteils, mit Siedewasser gefüllt ist. Dies bedeutet, dass zumindest ein erster Teilbereich des Speicherbehälters mit Siedewasser gefüllt ist. Ein vom ersten Teilbereich unterschiedlicher, zweiter Teilbereich des Speicherbehälters, insbesondere der übrige Speicherbehälter, ist mit Wasserdampf gefüllt, welcher die gleiche Temperatur wie das Siedewasser aufweist. Wird nun Dampf aus dem Speicherbehälter entnommen, so setzt eine Nachverdampfung ein, in deren Rahmen aus dem Siedewasser neuer Dampf bzw. Wasserdampf entsteht. Die hierfür erforderliche Wärme stammt aus dem Siedewasser.

Bei einem zweiten Schritt des Verfahrens wird zumindest ein Teil des in dem Dampfspeicher gespeicherten Dampfes aus dem Dampfspeicher abgeführt, wobei der aus dem Dampfspeicher abgeführte Dampf einem Reaktor des Gas-und-Dampf-Kombinationskraftwerks zugeführt wird. Bei einem dritten Schritt des Verfahrens wird der aus dem Dampfspeicher abgeführte Dampf in dem Reaktor mittels Wärme erwärmt, welche bei einer in dem Reaktor stattfindenden exothermen chemischen Reaktion freigesetzt wird. Mit anderen Worten wird im Rahmen des Verfahrens eine exotherme chemische Reaktion, das heißt eine chemische, Wärme abgebende Reaktion bewirkt, wobei im Rahmen einer solchen exothermen chemischen Reaktion Wärme freigesetzt wird. Die im Rahmen der exothermen chemischen Reaktion freigesetzte Wärme wird genutzt, um den aus dem Dampfspeicher abgeführten Dampf zu erwärmen, insbesondere zu überhitzen. Der mittels der bei der exothermen chemischen Reaktion freigesetzten Wärme erwärmte Dampf wird zu der Turbineneinrichtung geführt, welche mittels des zugeführten erwärmten Dampfes angetrieben wird. Mit Hilfe der bei der exothermen chemischen Reaktion freigesetzten Wärme kann der Dampf besonders energiegünstig erwärmt und dadurch auf eine besonders vorteilhafte, hohe Temperatur gebracht werden, so dass die Turbineneinrichtung mittels des erwärmten Dampfes besonders effektiv angetrieben werden kann.

Insbesondere kann die Turbineneinrichtung mittels des erwärmten Dampfes beschleunigt werden, so dass das Gas-und-Dampf-Kombinationskraftwerk mit Hilfe des erwärmten und der Turbineneinrichtung zugeführten Dampfes besonders schnell hochgefahren und dadurch von einem ersten Lastbereich in einen gegenüber dem ersten Lastbereich höheren, zweiten Lastbereich gebracht werden kann. Somit lässt sich insgesamt ein besonders effizienter und somit energiegünstiger Betrieb des Gas-und-Dampf-Kombinationskraftwerks realisieren.

Bei einer vorteilhaften Ausführungsform der Erfindung ist es vorgesehen dass als Edukte der exothermen chemischen Reaktion Produkte einer endothermen chemischen Reaktion verwendet werden, welche mittels Wärme bewirkt wird.

Bei einer vorteilhaften Ausführungsform der Erfindung ist es vorgesehen dass die Wärme zum Bewirken der endothermen chemischen Reaktion aus zumindest einem Teil des mittels des Abgases erzeugten Dampfes gewonnen wird.

Bei einer vorteilhaften Ausführungsform der Erfindung ist es vorgesehen dass die Wärme aus dem Teil des Dampfes an Edukte der endothermen chemischen Reaktion übertragen wird, um die endotherme Reaktion zu bewirken.

Bei einer vorteilhaften Ausführungsform der Erfindung ist es vorgesehen dass der Turbineneinrichtung der erwärmte Dampf zum Antreiben der Turbinenreinrichtung zugeführt wird, um das Gas-und-Dampf-Kombinationskraftwerk von einem ersten Lastbereich in einen gegenüber dem ersten Lastbereich höheren, zweiten Lastbereich hochzufahren.

Bei einer vorteilhaften Ausführungsform der Erfindung ist es vorgesehen dass die endotherme chemische Reaktion in dem zweiten Lastbereich bewirkt wird.

Zur Erfindung gehört auch ein Gas-und-Dampf-Kombinationskraftwerk, welches zum Durchführen eines erfindungsgemäßen Verfahrens ausgebildet ist. Vorteilhafte Ausgestaltungen des erfindungsgemäßen Verfahrens sind als vorteilhafte Ausgestaltungen des erfindungsgemäßen Gas-und-Dampf-Kombinationskraftwerks anzusehen und umgekehrt.

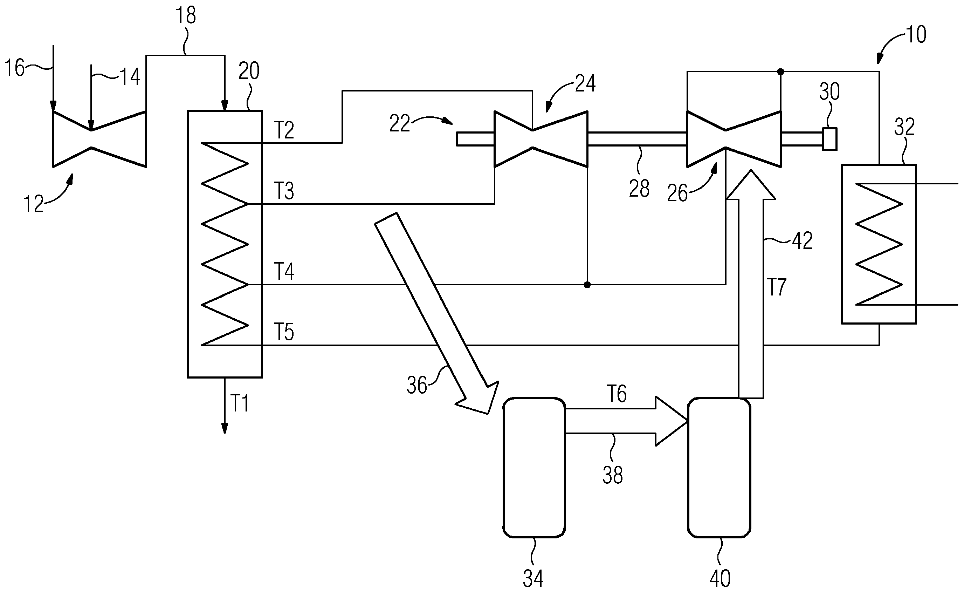

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Gas-und-Dampf-Kombinationskraftwerks, welches unter Zuhilfenahme von Wärme, die bei einer exothermen chemischen Reaktion freigesetzt wird, besonders schnell und energiegünstig hochgefahren werden kann.

Die einzige Figur zeigt in einer schematischen Darstellung ein im Ganzen mit 10 bezeichnetes Gas-und-Dampf-Kombinationskraftwerk, welches auch als GuD-Kraftwerk oder - der besseren Lesbarkeit wegen - als Kraftwerk bezeichnet wird. Das Kraftwerk umfasst wenigstens eine Gasturbine 12, welcher beispielsweise im Rahmen eines Verfahrens zum Betreiben des Kraftwerks Brennstoff zugeführt wird. Diese Zuführung von Brennstoff zu der Gasturbine 12 ist in der Figur durch einen Richtungspfeil 14 veranschaulicht. Bei dem Brennstoff handelt es sich insbesondere um einen gasförmigen Brennstoff wie beispielsweise Erdgas. Ferner wird der Gasturbine 12 Luft zugeführt, was in der Figur durch einen Richtungspfeil 16 veranschaulicht ist. Mittels der Gasturbine 12 wird der Brennstoff verbrannt, woraus Abgas der Gasturbine 12 resultiert. Somit stellt die Gasturbine 12 das Abgas bereit, was in der Figur durch einen Richtungspfeil 18 veranschaulicht ist. In der Gasturbine 12 bildet sich beispielsweise ein Gemisch aus dem Brennstoff und der Luft, wobei dieses Gemisch verbrannt wird. Daraus resultiert das Abgas der Gasturbine 12.

Anhand des Richtungspfeils 18 ist erkennbar, dass das Abgas einem Dampferzeuger 20 des Kraftwerks zugeführt wird. Der Dampferzeuger 20 wird auch als Boiler oder Verdampfer bezeichnet. Ferner wird dem Dampferzeuger 20 eine Flüssigkeit, insbesondere in Form von Wasser, zugeführt. Dabei erfolgt ein Wärmeübergang von dem Abgas der Gasturbine 12 an das Wasser, wodurch das Wasser erwärmt und verdampft wird. Dadurch wird aus dem Wasser Dampf erzeugt. Dies bedeutet, dass mittels des Abgases der Gasturbine 12 und mittels des Dampferzeugers 20 Dampf aus dem Dampferzeuger 20 zugeführten Wasser (Flüssigkeit) erzeugt wird. Infolge dieses Wärmeübergangs von dem Abgas an das Wasser wird das Abgas gekühlt, sodass es beispielsweise mit einer ersten Temperatur T1 von dem Dampferzeuger 20 abgeführt wird. Die erste Temperatur T1 beträgt beispielsweise zumindest im Wesentlichen 90°C (Grad Celsius).

Das Kraftwerk umfasst ferner eine im Ganzen mit 22 bezeichnete Turbineneinrichtung, welche vorliegend eine erste Turbine 24 und eine zweite Turbine 26 umfasst. Die Turbine 24 ist beispielsweise als Hochdruckturbine ausgebildet, wobei die Turbine 26 als Mitteldruck- und Niederdruckturbine ausgebildet ist. Der mittels des Abgases der Gasturbine 12 und mithilfe des Dampferzeugers 20 erzeugte Dampf wird der Turbineneinrichtung 22 zugeführt, sodass die Turbineneinrichtung 22, insbesondere die Turbinen 24 und 26, mittels des erzeugten heißen Dampfs angetrieben werden. Mittels der Turbineneinrichtung 22 wird in dem heißen Dampf enthaltene Energie in mechanische Energie umgewandelt, wobei die mechanische Energie über eine Welle 28 bereitgestellt wird. Die Turbineneinrichtung 22 umfasst beispielsweise in der Figur nicht im Einzelnen dargestellte Turbinenräder, denen der Dampf zugeführt wird. Dadurch werden die Turbinenräder mittels des Dampfs angetrieben. Die Turbinenräder sind beispielsweise drehfest mit der Welle 28 verbunden, sodass die Welle 28 von den Turbinenrädern angetrieben wird, wenn die Turbinenräder mittels des Dampfs angetrieben werden.

Das Kraftwerk umfasst ferner wenigstens einen Generator 30, welcher über die Welle 28 von der Turbineneinrichtung 22 antreibbar ist bzw. angetrieben wird. Dem Generator 30 wird somit die über die Welle 28 bereitgestellte mechanische Energie zugeführt, wobei mittels des Generators 30 zumindest ein Teil der zugeführten mechanischen Energie in elektrische Energie bzw. elektrischen Strom umgewandelt wird. Der Generator 30 kann diesen elektrischen Strom bereitstellen, welcher beispielsweise in ein Stromnetz eingespeist werden kann.

Der Dampf wird von der Turbineneinrichtung 22 abgeführt und einem Wärmetauscher 32 zugeführt, welcher als Kondensator fungiert bzw. ausgebildet ist. Mittels des Wärmetauschers 32 wird der Dampf gekühlt, wodurch der Dampf kondensiert. Hierdurch wird der Dampf wieder zu dem zuvor genannten Wasser, das dem Dampferzeuger 20 wieder zugeführt werden kann.

Um den Dampf mittels des Wärmetauschers 32 zu kühlen, wird dem Wärmetauscher 32 beispielsweise ein Kühlmedium, insbesondere eine Kühlflüssigkeit, zugeführt. Dabei kann ein Wärmeübergang von dem Dampf an die Kühlflüssigkeit erfolgen, wodurch der Dampf gekühlt wird und in der Folge kondensiert.

Das Kraftwerk weist eine Mehrzahl von in der Figur nicht näher dargestellten Leitungen auf, durch welche jeweilige Strömungen des mittels des Abgases der Gasturbine 12 erzeugten Dampfs strömen. Diese Strömungen können unterschiedliche Temperaturen aufweisen. In der Figur sind unterschiedliche Temperaturen T2, T3 und T4 des mittels des Abgases der Gasturbine 12 erzeugten Dampfs dargestellt, wobei die Temperatur T2 beispielsweise 595°C, die Temperatur T3 360°C und die Temperatur T4 240°C beträgt. Das Wasser verlässt den Kondensator beispielsweise mit einer Temperatur T5, welche beispielsweise 40°C beträgt.

In Abhängigkeit von dem Strombedarf kann das Kraftwerk beispielsweise in einem ersten Lastbereich sowie in einem gegenüber dem ersten Lastbereich höheren, zweiten Lastbereich betrieben werden. Der zweite Lastbereich ist beispielsweise ein Volllastbereich, in welchem das Kraftwerk bei Volllast bzw. unter Volllast betrieben wird. Dies ist beispielsweise bei einem hohen Strombedarf der Fall. Ist der Strombedarf niedrig, so wird das Kraftwerk beispielsweise in dem gegenüber dem Volllastbereich niedrigeren, ersten Lastbereich betrieben. Erhöht sich der Strombedarf, so ist es erforderlich, das Kraftwerk vom ersten Lastbereich in den zweiten Lastbereich zu bringen. Hierzu wird das Kraftwerk hochgefahren. Beispielsweise ist der erste Lastbereich ein Teillastbereich. Mit anderen Worten wird das Kraftwerk im ersten Lastbereich bei einer ersten Last und im zweiten Lastbereich bei einer gegenüber der ersten Last höheren, zweiten Last betrieben. Beide Lasten sind jedoch größer als 0. Das heißt, dass das Kraftwerk in beiden Lastbereichen aktiviert bzw. angeschaltet ist.

Bei dem Hochfahren des Kraftwerks ist es beispielsweise vorgesehen, dass die Turbineneinrichtung 22, insbesondere die Welle 28, beschleunigt wird. Dies bedeutet, dass sich die Turbineneinrichtung 22, insbesondere die Welle 28, im ersten Lastbereich beispielsweise mit einer ersten Drehzahl dreht, wobei sich die Turbineneinrichtung 22, insbesondere die Welle 28, im zweiten Lastbereich mit einer gegenüber der erste Drehzahl höheren, zweiten Drehzahl dreht. Dadurch stellt die Turbineneinrichtung 22 im zweiten Lastbereich über die Welle 28 eine höhere Menge an mechanischer Energie bereit, so dass der Generator 30 im zweiten Lastbereich gegenüber dem ersten Lastbereich eine höhere Menge an elektrischem Strom bereitstellt.

Um die Turbineneinrichtung 22 bzw. die Welle 28 zu beschleunigen, ist es beispielsweise erforderlich, dass in dem zweiten Lastbereich gegenüber dem ersten Lastbereich eine höhere Menge an Dampf mittels des Dampferzeugers 20 bereitgestellt wird. Hierzu stellt die Gasturbine 12 im zweiten Lastbereich gegenüber dem ersten Lastbereich eine höhere Menge an Abgas bereit. Die Gasturbine 12 selbst kann besonders schnell und einfach hochgefahren werden. Jedoch hängt der Dampferzeuger 20 bzw. die mittels des Dampferzeugers 20 erzeugbare Menge des Dampfes der Gasturbine 12 hinterher, da die Gasturbine 12 schneller hochgefahren werden kann als die mittels des Dampferzeugers 20 zu bewirkende Erzeugung des Dampfes.

Um nun ein besonders energiegünstiges sowie schnelles Hochfahren des Kraftwerks zu ermöglichen, umfasst das Kraftwerk 10 einen Dampfspeicher in Form eines Ruthsspeichers 34 zum Speichern von Dampf. Durch einen Richtungspfeil 36 ist angedeutet, dass im Rahmen eines Verfahrens zum Betreiben des Kraftwerks zumindest ein Teil des mittels des Abgases der Gasturbine 12 sowie mittels des Dampferzeugers 20 erzeugten Dampfes abgezweigt wird. Dieser abgezweigte Dampf bzw. der abgezweigte Teil des mittels des Abgases der Gasturbine 12 erzeugten Dampfes wird dem Ruthsspeicher 34 zugeführt und in dem Ruthsspeicher 34 gespeichert. Dies erfolgt insbesondere während des ersten Lastbereichs und/oder während des zweiten Lastbereichs.

Durch einen Richtungspfeil 38 ist veranschaulicht, dass zumindest ein Teil des in dem Ruthsspeicher 34 gespeicherten Dampfes aus dem Ruthsspeicher 34 abgeführt wird. Der aus dem Ruthsspeicher 34 abgeführte Dampf weist beispielsweise eine sechste Temperatur T6 und einen Druck von 38 bar auf. Die sechste Temperatur T6 beträgt beispielsweise 250°C (Grad Celsius). Der aus dem Ruthsspeicher 34 abgeführte Dampf wird einem Reaktor 40 des Kraftwerks zugeführt. In dem Reaktor 40 wird der aus dem Ruthsspeicher 34 abgeführte Dampf mittels Wärme, welche bei einer exothermen chemischen Reaktion freigesetzt wird, erwärmt, so dass der Dampf stromab des Reaktors 40 beispielsweise eine siebte Temperatur T7 aufweist, welche größer als die sechste Temperatur T6 ist. Vorzugsweise beträgt die Temperatur T7 450 °C, wobei der Dampf stromab des Reaktors 40 beispielsweise 38 bar aufweist.

In der Figur ist durch einen Richtungspfeil 42 veranschaulicht, dass der mittels des Reaktors 40 erwärmte Dampf zu der Turbineneinrichtung 22 geführt wird. Insbesondere wird der Dampf zur Turbine 26 und insbesondere zur Mitteldruckturbine geführt, so dass die Turbineneinrichtung 22, insbesondere die Turbine 26 und vorzugsweise die Mitteldruckturbine, mittels des mittels des Reaktors 40 erwärmten, insbesondere überhitzten, Dampfes angetrieben wird. Dadurch, dass die Turbineneinrichtung 22 mittels des in dem Reaktor 40 erwärmten Dampfes angetrieben wird, wird die Turbineneinrichtung 22, insbesondere die Welle 28, beschleunigt, so dass das Kraftwerk - wie zuvor beschrieben - aus dem ersten Lastbereich in den zweiten Lastbereich hochgefahren werden kann.

Vorzugsweise ist es vorgesehen, dass als Edukte der exothermen chemischen Reaktion Produkte einer endothermen chemischen Reaktion verwendet werden, wobei die endotherme chemische Reaktion mittels Wärme bewirkt wird. Dies bedeutet, dass die exotherme chemische Reaktion beispielsweise eine Rückreaktion einer chemischen Gleichgewichtsreaktion ist. Die endotherme chemische Reaktion ist eine Hinreaktion der chemischen Gleichgewichtsreaktion. Die Hinreaktion, das heißt die endotherme chemische Reaktion nimmt Wärme auf, wobei diese Wärme der Hinreaktion bzw. den Edukten der Hinreaktion zugeführt wird. Aus den Edukten der Hinreaktion entstehen Produkte der Hinreaktion. Diese Produkte der Hinreaktion (endotherme chemische Reaktion) sind Edukte der Rückreaktion (exotherme chemische Reaktion).

Im Rahmen der Rückreaktion werden aus den Edukten der Rückreaktion Produkte der Rückreaktion. Diese Produkte der Rückreaktion können als Edukte der Hinreaktion verwendet werden. In den Produkten der Hinreaktion ist somit die Wärme gespeichert, die den Edukten der Hinreaktion zugeführt wurde, um die Hinreaktion zu bewirken. Dadurch kann Energie besonders vorteilhaft gespeichert und für spätere Zwecke bzw. zu einem späteren Zeitpunkt, insbesondere im Rahmen des Hochlaufens des Kraftwerks, genutzt werden. Beispielsweise ist es möglich, den Edukten der Hinreaktion die Wärme zum Bewirken der Hinreaktion während des ersten Lastbereichs und/oder während des zweiten Lastbereichs zuzuführen.

Während des Hochlaufens läuft die Rückreaktion ab, so dass Wärme freigesetzt wird, mittels welcher der aus dem Ruthsspeicher 34 abgeführte Dampf erwärmt, insbesondere überhitzt, wird. Vorzugsweise ist es vorgesehen, dass die Wärme zum Bewirken der endothermen chemischen Reaktion (Hinreaktion) aus zumindest einem Teil des mittels des Abgases der Gasturbine erzeugten Dampfes gewonnen wird. Insbesondere ist es denkbar, die Wärme aus dem Teil des Dampfes an Edukte der Hinreaktion zu übertragen, um die Hinreaktion zu bewirken. Beispielsweise wird Wärme aus zumindest einem Teil des mittels der Gasturbine 12 bzw. mittels Abgas der Gasturbine 12 erzeugten Dampfes über wenigstens einen Wärmetauscher an die Edukte der endothermen chemischen Reaktion übertragen. Dadurch wird die endotherme chemische Reaktion bewirkt, so dass in den Produkten der endothermen chemischen Reaktion zumindest ein Teil der den Edukten zugeführten Wärme gespeichert ist.

Im Rahmen der Rückreaktion (exotherme chemische Reaktion) wird die in den Produkten der Hinreaktion gespeicherte Wärme frei, wobei diese freiwerdende Wärme zum Überhitzen des dem Ruthsspeicher 34 abgeführten Dampfes genutzt wird. Die im Rahmen der exothermen chemischen Reaktion freigesetzte bzw. freiwerdende Wärme wird dem aus dem Ruthsspeicher 34 abgeführten Dampf beispielsweise über einen Wärmetauscher zugeführt, um dadurch den aus dem Ruthsspeicher 34 abgeführten Dampf effektiv und schnell erwärmen zu können.

Alternativ oder zusätzlich ist es denkbar, einen Wärmeübergang vom Dampf an die Edukte der Hinreaktion und/oder ein Übertragen der im Rahmen der Rückreaktion freiwerdenden Wärme an den aus dem Ruthsspeicher 34 abgeführten Dampf direkt, das heißt ohne Vermittlung eines Wärmetauschers, zu realisieren. Der jeweilige Dampf berührt dann beispielsweise die Edukte der Hinreaktion bzw. die Edukte und/oder Produkte der Rückreaktion, wobei der Dampf die Edukte der Hinreaktion bzw. die Edukte und/oder Produkte der Rückreaktion anströmt bzw. umströmt. Durch den Einsatz eines Wärmetauschers kann eine räumliche Trennung des Dampfes von den Edukten der Hinreaktion bzw. von den Edukten und/oder Produkten der Rückreaktion realisiert werden, sodass der Dampf die Edukte der Hinreaktion bzw. die Edukte und/oder Produkte der Rückreaktion nicht direkt berührt.

Der dem Ruthsspeicher 34 zugeführte Dampf weist beispielsweise einen Massenstrom von 21,4 kg/s, einen Druck von 38 bar und eine Temperatur von 334 °C auf. In dem Ruthsspeicher 34 weist der gespeicherte Dampf beispielsweise eine Temperatur von 250 °C auf.

Der der Turbineneinrichtung 22 zugeführte Dampf zum Antreiben der Turbineneinrichtung 22 weist beispielsweise einen Massenstrom von 25 kg/s (Kilogramm pro Sekunde) auf. Zunächst weist der aus dem Ruthsspeicher 34 abgeführte Dampf stromab des Ruthsspeichers 34 und stromauf des Reaktors 40 beispielsweise eine Temperatur von 250 °C auf. Mittels der im Rahmen der Rückreaktion freigesetzten Wärme wird der Dampf in dem Reaktor 40 beispielsweise auf 450 °C erwärmt.

Alternativ oder zusätzlich ist es denkbar, dass die Wärme zum Bewirken der endothermen chemischen Reaktion aus zumindest einem Teil des Abgases der Gasturbine 12 gewonnen wird. Insbesondere ist es denkbar, dass die Wärme zum Bewirken der endothermen chemischen Reaktion aus zumindest einem Teil des aus dem Dampferzeuger 20 ausströmenden Abgases der Gasturbine 12 gewonnen wird. Dadurch kann das Abgas der Gasturbine 12, insbesondere stromab des Dampferzeugers 20, genutzt werden, um die endotherme Reaktion zu bewirken. Die Übertragung der Wärme aus dem Abgas der Gasturbine 12 an die Edukte der Hinreaktion kann beispielsweise auf die Weise erfolgen, die zuvor in Zusammenhang mit dem mittels der Gasturbine 12 erzeugten Dampf erläutert wurde.

Die Rückreaktion findet in dem Reaktor 40 statt. Ferner kann die Hinreaktion im Reaktor 40 stattfinden. Ferner ist es denkbar, einen endothermen Reaktor zum Durchführen der Hinreaktion zu verwenden, wobei beispielsweise ein exothermer Reaktor zum Durchführen der Rückreaktion verwendet wird.

Mit Hilfe der Hinreaktion bzw. der Produkte der Hinreaktion wird in Zusammenspiel mit dem Reaktor 40 ein thermochemischer Speicher geschaffen, in welchem auf die beschriebene Weise ohnehin zur Verfügung stehende Wärme gespeichert werden kann. Dieser thermochemische Speicher ist ein Zusatz für den als Dampfspeicher fungierenden Ruthsspeicher 34, um mittels des thermochemischen Speichers, welcher ein Wärmespeicher ist, unter Zuhilfenahme der Rückreaktion den aus dem Ruthsspeicher 34 abgeführten Dampf zu erwärmen.

## Patentansprüche

1. Verfahren zum Betreiben eines Gas-und-Dampf-Kombinationskraftwerks (10), bei welchem mittels Abgas einer Gasturbine (12) heißer Dampf erzeugt wird, mittels welchem über wenigstens eine Turbineneinrichtung (22) wenigstens ein Generator (30) zum Bereitstellen von elektrischem Strom angetrieben wird, wobei folgende Schritte durchgeführt werden:
- Abzweigen zumindest eines Teils des erzeugten Dampfes und Speichern des abgezweigten Dampfes in einem Dampfspeicher (34);
- Abführen zumindest eines Teils des in dem Dampfspeicher (34) gespeicherten Dampfes aus dem Dampfspeicher (34), wobei der aus dem Dampfspeicher (34) abgeführte Dampf einem Reaktor (40) des Gas-und Dampf-Kombinationskraftwerks (10) zugeführt wird;
- Erwärmen des aus dem Dampfspeicher (34) abgeführten Dampfes in dem Reaktor (40) mittels Wärme, welche bei einer in dem Reaktor (40) stattfindenden exothermen chemischen Reaktion freigesetzt wird; und
- Führen des erwärmten Dampfes zu der Turbineneinrichtung (22), welche mittels des zugeführten erwärmten Dampfes angetrieben wird.

2. Verfahren nach Anspruch 1,
**dadurch gekennzeichnet, dass**
als Edukte der exothermen chemischen Reaktion Produkte einer endothermen chemischen Reaktion verwendet werden, welche mittels Wärme bewirkt wird.

3. Verfahren nach Anspruch 2,
**dadurch gekennzeichnet, dass**
die Wärme zum Bewirken der endothermen chemischen Reaktion aus zumindest einem Teil des mittels des Abgases erzeugten Dampfes gewonnen wird.

4. Verfahren nach Anspruch 3,
**dadurch gekennzeichnet, dass**
die Wärme aus dem Teil des Dampfes an Edukte der endothermen chemischen Reaktion übertragen wird, um die endotherme Reaktion zu bewirken.

5. Verfahren nach einem der vorhergehenden Ansprüche,
**dadurch gekennzeichnet, dass**
der Turbineneinrichtung (22) der erwärmte Dampf zum Antreiben der Turbinenreinrichtung (22) zugeführt wird, um das Gas-und-Dampf-Kombinationskraftwerk (10) von einem ersten Lastbereich in einen gegenüber dem ersten Lastbereich höheren, zweiten Lastbereich hochzufahren.

6. Verfahren nach Anspruch 5 in dessen Rückbezug auf einen der Ansprüche 2 bis 4,
**dadurch gekennzeichnet, dass**
die endotherme chemische Reaktion in dem zweiten Lastbereich bewirkt wird.

## Claims

1. Method for operating a combined gas and steam power plant (10), in which by means of exhaust gas of a gas turbine (12) hot steam is generated, by means of which at least one generator (30) for providing electrical current is driven via at least one turbine device (22),
wherein the following steps are carried out:
- diverting at least a part of the generated steam and storing the diverted steam in a steam accumulator (34);
- discharging at least a part of the steam stored in the steam accumulator (34) from the steam accumulator (34), the steam discharged from the steam accumulator (34) being supplied to a reactor (40) of the combined gas and steam power plant (10);
- heating the steam discharged from the steam accumulator (34) in the reactor (40) by means of heat which is released during an exothermic chemical reaction taking place in the reactor (40); and
- feeding the heated steam to the turbine device (22), which is driven by means of the heated steam supplied.

2. Method according to Claim 1,
**characterized in that**
products of an endothermic chemical reaction, which is carried out by means of heat, are used as reactants of the exothermic chemical reaction.

3. Method according to Claim 2,
**characterized in that**
the heat for carrying out the endothermic chemical reaction is obtained from at least a part of the steam generated by means of the exhaust gas.

4. Method according to Claim 3,
**characterized in that**
the heat from the part of the steam is transferred to reactants of the endothermic chemical reaction in order to carry out the endothermic reaction.

5. Method according to one of the preceding claims,
**characterized in that**
the turbine device (22) is supplied with the heated steam for driving the turbine device (22) in order to step up the combined gas and steam power plant (10) from a first load range to a second load range, which is higher than the first load range.

6. Method according to Claim 5 in its dependency on one of Claims 2 to 4,
**characterized in that**
the endothermic chemical reaction is carried out in the second load range.

## Revendications

1. Procédé pour faire fonctionner une centrale (10) électrique à cycle combiné gaz et vapeur, dans lequel on produit, au moyen des gaz d'échappement d'une turbine (12) à gaz, de la vapeur chaude, au moyen de laquelle on entraîne, par au moins un dispositif (22) de turbine, au moins un générateur (30) pour disposer de courant électrique,
dans lequel on effectue les stades suivants :
- dérivation d'au moins une partie de la vapeur produite et emmagasinage de la vapeur dérivée dans un accumulateur (34) de vapeur ;
- sortie de l'accumulateur (34) de vapeur d'au moins une partie de la vapeur emmagasinée dans l'accumulateur (34) de vapeur, la vapeur sortie de l'accumulateur (34) de vapeur étant envoyée à un réacteur (40) de la centrale (10) à cycle combiné gaz et vapeur ;
- chauffage dans le réacteur (40) de la vapeur sortie de l'accumulateur (34) de vapeur au moyen de chaleur libérée lors d'une réaction chimique exothermique ayant lieu dans le réacteur (40) ; et
- envoi de la vapeur chauffée au dispositif (22) de turbine, qui est entraîné au moyen de la vapeur chauffée, qui est envoyée.

2. Procédé suivant la revendication 1,
**caractérisé en ce que**
on utilise comme éduits de la réaction chimique exothermique des produits d'une réaction chimique endothermique, qui est effectuée au moyen de chaleur.

3. Procédé suivant la revendication 2,
**caractérisé en ce que**
on obtient la chaleur pour effectuer la réaction chimique endothermique à partir d'au moins une partie de la vapeur produite au moyen des gaz d'échappement.

4. Procédé suivant la revendication 3,
**caractérisé en ce que**
l'on transmet la chaleur à partir de la partie de la vapeur à des éduits de la réaction chimique endothermique, afin de provoquer la réaction endothermique.

5. Procédé suivant l'une des revendications précédentes,
**caractérisé en ce que**
l'on envoie au dispositif (22) de turbine la vapeur chauffée pour entraîner le dispositif (22) de turbine, afin de faire passer la centrale (10) à cycle combiné gaz et vapeur d'une première plage de charge à une deuxième plage de charge plus haute que la première plage de charge.

6. Procédé suivant la revendication 5 lorsqu'elle se rapport à l'une des revendications 2 à 4,
**caractérisé en ce que**
l'on effectue la réaction chimique endothermique dans la deuxième plage de charge.
